# EUROPEAN PATENT APPLICATION

(11) **EP 1 876 453 A1**
(43) Date of publication of application: **09.01.2008**
(21) Application number: 06116793.8
(22) Date of filing: 07.07.2006
(51) Int. Cl.: G01N 35/10, B01L 3/00, B81B 7/00, G01N 30/30, G01N 30/60

(54) **Integrated chip temperature control**

(71) Applicant: Agilent Technologies, Inc., Santa Clara, CA 95051 (US)
(72) Inventor: Kraiczek, Karsten, 76337 Waldbronn (DE); Reinhardt, Thomas, 76227 Karlsruhe (DE)
(74) Representative: Barth, Daniel Mathias

(57) **Abstract**

A fluidic chip device (100) adapted for processing a fluidic sample, wherein the fluidic sample is to be conducted through the fluidic chip device (100), the fluidic chip device (100) comprising a substrate (140) and a substrate internal temperature affecting unit (130, 145 to 148, 153, 155) adapted for affecting a temperature of at least a part of the fluidic chip device (100).

## Description

### BACKGROUND ART

The present invention relates to a fluidic chip device.

In liquid chromatography, a fluidic analyte may be pumped through a column comprising a material which is capable of separating different components of the fluidic analyte. Such a material, so-called beads which may comprise silica gel, may be filled into a column tube which may be connected to other elements (like a control unit, containers including sample and/or buffers).

More precisely, the fluidic analyte may first be pumped through a first column (which may be denoted as a pre-column) and may then be pumped through a second column (which may be denoted as an analytical column).

US 5,908,552 discloses a column for capillary chromatographic separations, for example high performance liquid chromatography, including a column bed of packing material arranged in the inner bore of a column.

US 2004/0156753 A1 by the same applicant Agilent Technologies discloses a PAEK-based microfluidic chip device comprising two separate substrates which are bonded together to form channels where gases or liquids may move to accomplish applications of the microfluidic chip device. Thus, an internal cavity may be formed as a channel of the microfluidic chip device.

EP 1,520,837 A1 by the same applicant Agilent Technologies discloses a component part of a microfluidic valve adapted to be coupled with a microfluidic chip device, the microfluidic chip device having at least one port coupled to a flow path of the microfluidic chip device, the component part comprising a first revolving valve element having a first interface with the microfluidic chip device and a second revolving valve element having a second interface with the microfluidic chip device and being located within a through hole of the first revolving valve element.

### DISCLOSURE

It is an object of the invention to provide an efficient fluidic chip device. The object is solved by the independent claims. Further embodiments are shown by the dependent claims.

According to an exemplary embodiment of the present invention, a fluidic chip device (for instance a liquid chromatography device) adapted for processing a fluidic sample (for instance a biological sample including a plurality of components) is provided, wherein the fluidic sample is to be conducted through the fluidic chip device, the fluidic chip device comprising a substrate (for instance a laminar multi layer substrate), and a substrate internal temperature affecting unit (for instance a temperature adjusting unit integrated in and/or on the substrate) adapted for affecting a temperature of at least a part of the fluidic chip device (for instance of the fluidic sample and/or of components for processing the fluidic sample and being located on or in the substrate).

According to another exemplary embodiment, a method of processing a fluidic sample is provided, the method comprising conducting the fluidic sample through a fluidic chip device, and affecting a temperature of at least a part of the fluidic chip device using a substrate internal temperature affecting unit.

According to an exemplary embodiment, a fluidic chip device (for instance a liquid chromatography apparatus) may be provided in which a unit for affecting or influencing the temperature of specific parts of the fluidic chip device may be foreseen, wherein such a temperature affecting unit may be located in an interior of the substrate, that is to say may be provided as a component which may not simply be detached from the substrate but is manufactured together with the substrate. In other words, such a temperature affecting unit may be provided in and/or in the substrate. In other words, the temperature affecting unit may be integrally formed with the fluidic chip device, that is to say may be assembled or mounted in a manner so that it is essentially integrated within the substrate.

The term "fluidic chip device" may particularly denote a device for processing a fluid (including a gas, a liquid, and mixtures thereof) which may at least partially be provided in and/or on a chip as a substrate.

The term "substrate" may particularly denote any single layer or multiple layer arrangement serving as a carrier element of a fluidic chip device. In and/or on a substrate, one or more functional components of the fluidic chip device may be foreseen.

The term "substrate internal temperature affecting unit" may particularly denote any component allowing to influence the temperature at one or more positions on and/or in the substrate. It may be a unit which is not provided externally or separately from a substrate, but may be provided internally of the substrate, for instance integrated therein.

The term "processing element" may particularly denote any component which may influence a fluidic sample flowing through the device. It may particularly fulfill one of the functions of separating, purifying, mixing, heating, cooling, and chemically modifying the fluidic sample.

The term "frit" may particularly denote a sieve with very small holes or a piece of porous material. The frit may close columns to retain beads but to allow fluid to pass.

The term "beads" may particularly denote a filling material of columns, for example balls with diameters in the range of micrometers, employed for chromatographically purposes.

Separation columns may be channels filled with beads, or may be monolithic separation columns.

By providing such a temperature affecting unit (which may particularly be a temperature control unit or a temperature regulating unit), it may be possible to specifically and selectively influence the temperature of selected parts of the fluidic chip device with a small heat introduction in the case of heating (or heat removal in case of cooling). The entire construction may be very small and the performance of such a fluidic device may be significantly improved, since temperature dependent performance characteristics may be adjusted.

For instance, the fluidic device may be a HPLC-Chip/MS Interface for an Agilent Ion Trap mass spectrometer. A corresponding HPLC-Chip Cube interface is available within an Agilent 1100 Series LC system. In other words, the fluidic device may be implemented as a plastic microfluidic chip which has a tip at an outlet which tip may be coupled to a mass spectrometer unit for further processing. At such a tip, a microspray may be emitted which may be further analyzed by the mass spectroscopy unit (LC/MS).

Therefore, an integrated chip temperature control for a microfluidic device may be made possible. For many applications, it may be advantageous to have a local and locally varying thermostat integrated in a chip, which may include a pre-column (or enrichment column) and a main column (or analytical column). In the pre-column, it may be advantageous to keep the sample at room temperature or even cool the sample below room temperature. However, in contrast to this, it may be advantageous to heat the sample in the main column. However, other temperature adjustment schemes are possible.

Apart from heating or cooling the sample while passing such a processing element or chromatographic column, it may be also advantageous to provide a thermostat for influencing the temperature close to an outlet tip of the fluidic chip (that is to say at an interface between the fluidic chip device for LC applications and a connected mass spectrometer).

It is also possible that the temperature is measured at one or more positions on such a chip. The measured temperature values may be supplied to a control unit, and the control unit may decide on the basis of the measured temperatures how the temperature affecting unit shall be controlled. For instance, specific heating or cooling schemes or cycles may be applied in accordance with a specific experiment to be carried out.

The actual temperature manipulation element may be any heating or cooling element which may be installed on such a chip, like Peltier elements, cooling elements, heating cartridges, or the like. By taking such measures, it may be possible to provide an on-chip cooling with small influences on the environment and with low costs and low efforts.

Therefore, it may be possible to position the thermostat locally on the chip, so that a heating or cooling of specific portions, for instance of a column, may be performed directly at this position. When integrating such thermostats and/or temperature sensors directly in a plastic chip, it may be sufficient to use the already available layers of such a laminar structure, or to provide one or more additional layers, for instance for providing a metallisation for an ohmic heating, thermal isolations to isolate the temperature affecting unit from other portions of the chip, conduits through which a heating or cooling fluid may be conducted, etc.

Exemplary embodiments may use a thin-film metallization procedure to provide additional metallization layers, as a basis for a heating or cooling unit (for instance for supplying ohmic heat when conducting a current through the metallization layer(s) and/or for conducting an electric temperature control signal through the metallization layer(s)). For example, such a multilayer or laminar structure may comprise three or five layers.

Therefore, according to an exemplary embodiment, a liquid chromatography chip with an integrated heating or cooling element may be provided. Gas may be pumped through conduits of such a chip to transport heat to be deposited in the system at one or more selective positions. However, also a liquid heating/cooling is possible, for instance by pumping water having a high value of the heating capacity through conduits for an efficient heating or cooling. For an ohmic heating, a heating wire may be implemented within such a chip in order to provide for an electric heating using dissipated electrical energy converted into thermal energy.

According to an exemplary embodiment, a temperature control of a polymer microfluidic chip device may be provided. This may provide advantages of thermostating for the separation of intact proteins.

Polymer microfluidic chip devices using pressure driven separation and coupled with high sensitivity mass spectrometry have demonstrated the ability to analyze complex biological mixtures. These devices may exceed in many aspects the performance of conventional nanospray LC/MS devices. For several applications, it may be advantageous to control the temperature of the microfluidic chip. Providing a localized thermostating may have an advantageous impact on the chromatographic performance for separation of intact proteins or other fractions of a multi-component sample.

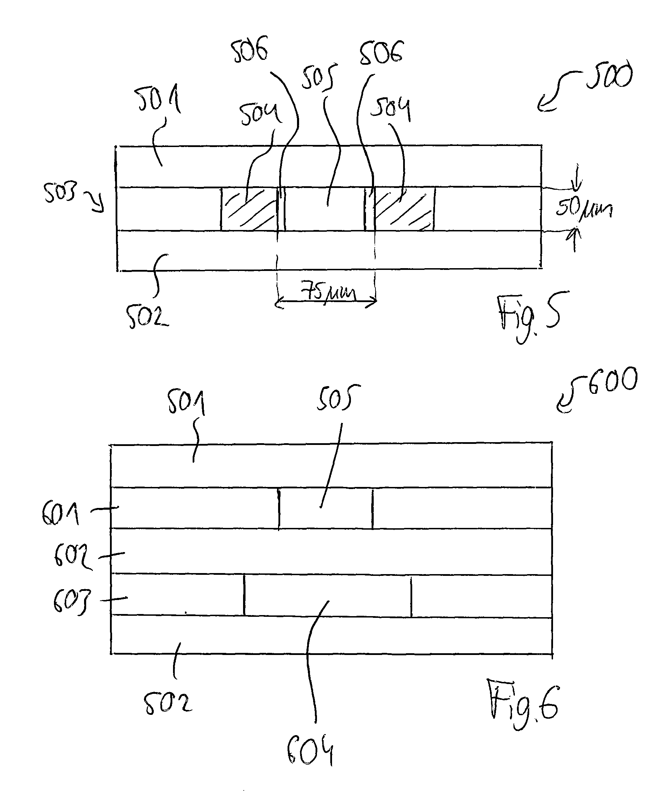

UV laser ablation in combination with vacuum lamination of polyimide films may be used to create multilayer polymer-based microfluidic chip devices with excellent chemical resistance to solvents and bio-friendly environment for proteins and peptides. Open micro channels may be packed with macroporous reversed phase materials (mRP) to create HPLC columns. Such a chip may be sandwiched between a microvalve for fluid connections (see Fig. 4), and the nanospray emitter may be laser-ablated onto the chip for direct interfacing to the mass spectrometer unit. Metals may be applied by thin film deposition to create electrical contact for electrospray biasing and to support thermostating features.

New mRP C-18 stationary phases may offer high protein recovery, excellent reproducibility and higher loading capacity compared to conventional reversed phase columns when operated at high temperatures. According to exemplary embodiments, new techniques may be provided for supporting thermostating features on the microfluidic chip structure. Functional elements such as enrichment column and analytical column may be thermally isolated and can be precisely temperature-controlled over a range from, for instance, 4°C to 120°C with low response time allowing fast equilibration and temperature programming. Overall impact of discreet temperature control on chromatographic performance may be high.

Next, further exemplary embodiments of the fluidic device will be explained. However, these embodiments also apply for the method of processing a fluidic sample.

The temperature affecting unit may be adapted for affecting the temperature of the fluidic sample while being conducted through the fluidic chip device. Therefore, a mobile phase comprising fractions of molecules to be separated from one another may be directly cooled or heated when flowing through the fluidic device. This may have a direct impact on the separation characteristic or performance, which can therefore be improved or optimized.

The fluidic device may comprise a processing element provided on and/or in the substrate and adapted for interacting with the fluidic sample. The temperature of such a processing element may be selectively affected or influenced by the temperature affecting unit. Therefore, even such a processing element which has a direct impact on the separation capability may be influenced with respect to its thermal properties. For instance, inner walls of a chromatographic column as an example for such a processing element may be heated or cooled.

The fluidic device may comprise a temperature sensor provided on and/or in the substrate and adapted for measuring a temperature of at least a part of the fluidic chip device. Such a temperature sensor may be a resistor or a diode, or any other temperature detection element which may be provided in a sufficiently small dimension so as to be integratable into the fluidic device. By measuring the temperature, the amount of information and knowledge about the operation conditions of the fluidic device may be improved. This may allow to significantly improve the accuracy of a temperature control. When the temperature sensor detects that the temperature is too low, heating may be initiated. If the temperature sensor detects that the temperature is too high, cooling may be triggered.

The temperature sensor may be adapted for providing a measurement signal indicative of the measured temperature to the temperature affecting unit. The temperature affecting unit may then adjust the temperature of at least a part of the fluidic chip device (for instance of a chromatographic column, a tip, or a reaction zone) to a desired value based on the measured temperature. The temperature may be adjusted by using a measured temperature value as a parameter of a temperature adjustment scheme, to avoid overheating or overcooling.

The temperature affecting unit may be adapted for selectively heating or for selectively cooling at least a part of the fluidic chip device. It may also be possible to provide a temperature affecting unit which allows both, heating or cooling, in accordance with corresponding control signals of a control unit resulting in an increased flexibility of the system.

The temperature affecting unit may be adapted for affecting a temperature of different parts of the fluidic chip separately. In other words, different temperature affecting sub-portions may be positioned at specific portions of the chip, each of the sub-portions being controllable separately from one another. This may allow for a refined temperature adjustment of the chip.

The temperature affecting unit may comprise at least one of the group consisting of a Peltier heating element, a Peltier cooling element, a heating cartridge, a cooling cartridge, a fluid cooling unit, a fluid heating unit, an ohmic heating element, an inductive heating element, and a capacitive heating element.

A Peltier heating or cooling may be based on the fact that when applying a current to a Peltier element, the connection portion between the two metals is heated or cooled.

A heating cartridge may be operated to provide a heating feature once. A cooling cartridge may be operated in a similar manner. Such a cartridge may generate or consume thermal energy by carrying out an exothermic or endothermic chemical reaction.

A fluid cooling unit may be based on a flow of a fluid (for instance a liquid or a gas) through conduits formed in the substrate. Provisions should be taken that a proper thermal exchange between the fluid and the portions to be heated or cooled may be ensured. This may be done by defining portions of thermally conducting and thermally insulating material so as to control the thermal flow. With a fluid cooling or heating unit, the temperature adjustment may be achieved by heat conduction, or heat convection. It is further possible to use heat radiation effects, when heating with an infrared lamp or the like.

An ohmic heating element may be based on the fact that, when a current flows through an electrically conductive material, the ohmic heat may be supplied to the fluidic chip for heating.

An inductive element may be based on the generation of electromagnetic waves which may be absorbed by an antenna or coil structure provided in the fluidic device.

For capacitive heating, a capacitor may be formed in the fluidic device and may be supplied with electric or electromagnetic energy.

The substrate may comprise a plurality of layers. For instance, three or five layers may form a laminar structure of the fluidic device which may allow for providing all the required components of the fluidic device within the layered structure.

Therefore, according to one embodiment, the substrate may comprise a top layer, a bottom layer and at least one intermediate layer sandwiched between the top layer and the bottom layer. The at least one intermediate layer may comprise a conduit through which the fluidic sample is to be conducted, and at least one of the at least one intermediate layer(s) may comprise the temperature affecting unit. The temperature affecting unit and fluidic sample may be provided in the same intermediate layers, or in different intermediate layers.

The processing element may be adapted for retaining the fluidic sample (that is to say to trap selectively a fluidic sample of interest, for instance a special protein of a multi-component biological sample) and for allowing other components of the mobile phase to pass the processing element. This may be achieved due to different chemical properties of different components of the mobile phase, resulting in different ways of interacting between the components of the mobile phase and a stationary phase located fixed in the pre-column. Therefore, a pre-separation may be performed in this processing element.

A further processing element may be adapted to be supplied with the fluidic sample released from the first processing element and to further separate the fluidic sample from other components of the mobile phase. This may be achieved due to different chemical properties or different components of the mobile phase, resulting in different ways of interacting between the components of the mobile phase and the stationary phase located fixed in the analytical column. Therefore, a two-stage fluid separation system may be provided in which, after pre-separating the sample in the first processing element, a further processing in a second processing element may be performed to further increase the separation performance or degree of purity of the separated component.

The fluidic device may comprise a tip coupled to an outlet of the further processing element and adapted to be coupled to a mass spectroscopy unit. In other words, the fluidic device may comprise a tip emitting a spray of the separated fluidic sample and coupled to an outlet of the further processing element. The fluidic device may be implemented as a plastic microfluidic chip which has a tip at an outlet which tip may be coupled to a mass spectrometer unit for further processing. At such a tip, a microspray may be emitted which may be further analyzed by the mass spectroscopy unit.

The temperature affecting unit may be adapted for affecting the temperature of the tip. By influencing the temperature of the tip, also the temperature of the emitted spray may be set so as to prepare the sample for further processing in the MS.

The substrate internal temperature affecting unit may be adapted as one of the group consisting of a temperature control unit and a temperature regulating unit. A temperature control unit may be denoted as a unit which allows adjusting a temperature. A temperature regulating unit may be denoted as a feedback system which uses a known or measured present temperature and adapts its regulating function depending on the actual temperature in comparison to a desired temperature.

The substrate internal temperature affecting unit may be integrally formed, or provided on and/or in the substrate. The substrate may comprise at least one material of the group consisting of a plastic, a polymer, a metal, a semiconductor and a ceramic. Materials of the substrate may be selected in accordance with the required thermal properties, and the fluid conducting properties.

The substrate may have an essentially rectangular cross section. Furthermore, the substrate may have a plate-like shape. Typical dimensions of the substrate are a thickness of 0.3 mm, and a dimension of several cm in length and in width.

The fluidic device may comprise a conduit formed in the substrate, wherein the fluidic device may be conductable through the conduit. The fluidic sample may be brought in thermal contact with a gas or liquid flow which may be thermally coupled or physically coupled to the fluidic sample.

At least a part of the processing element and at least a part of the further processing element may be filled with a fluid separating material. Such a fluid separating material which may also be denoted as a stationary phase may be any material which allows an adjustable degree of interaction with a sample so as to be capable of separating different components of such a sample. The fluid separating material may be a liquid chromatography column filling material or packing material comprising at least one of the group consisting of polystyrene, zeolite, polyvinylalcohol, polytetrafluorethylene, glass, polymeric powder, silicon dioxide, and silica gel. However, any packing material can be used which has material properties allowing an analyte passing through this material to be separated into different components, for instance due to different kinds of interactions or affinities between the packing material and fractions of the analyte.

At least a part of the processing element and at least a part of the further processing element may be filled with a fluid separating material, wherein the fluid separating material may comprise beads having a size in the range of essentially 1 µm to essentially 50 µm. Thus, these beads may be small particles which may be filled inside the separation columns. The beads may have pores having a size in the range of essentially 0.02 µm to essentially 0.03 µm. The fluidic sample may be passed through the pores, wherein an interaction may occur between the fluidic sample and the pores. By such effects, separation of the fluid may occur.

At least a part of the processing element may be filled with a first fluid separating material, and at least a part of the further processing element may be filled with a second fluid separating material being identical with the first fluid separating material. The processing element and the further processing element may be filled with an identical stationary phase. In other words, the fluid separating material filled in the processing elements may be identical. However, alternatively, it is also possible that the fluid separation materials filled in the two columns differ from one another, allowing to accurately adjust elution forces.

The processing element may have a size which differs from a size of the further processing element. Particularly, the processing element (pre-column) may be significantly smaller than the further processing element (main column). This different size may result in a different volume capability and fluid separation properties of the two processing elements, which may be adjusted or adapted to one another by the temperature manipulation feature according to an exemplary embodiment.

At least a part of components of the fluidic chip device may be integrated in a plastic chip. Therefore, exemplary embodiments may be implemented as well in a chip-like architecture in which an arrangement of multiple layers has integrated therein the components for the fluid processing.

The fluidic chip device may be adapted as a fluid separation system for separating components of the mobile phase. When a mobile phase including a fluidic sample is pumped through the fluidic chip device, for instance with a high pressure, the interaction between a filling of the column and the fluidic sample may allow for separating different components of the sample, as performed in a liquid chromatography device or in a gel electrophoresis device.

However, the fluidic chip device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a gel electrophoresis device or a liquid chromatography device), the different samples may be distinguished, and one sample or band of material may be selectively isolated as a purified sample.

The fluidic chip device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyte, an affinity parameter, or the like. The term "biological parameter" may particularly denote a concentration of a protein, a gene or the like in a biochemical solution, a biological activity of a component, etc.

The fluidic chip device may be or may be implemented in different technical environments, like a sensor device, a test device for testing a device under test or a substance, a device for chemical, biological and/or pharmaceutical analysis, a capillary electrophoresis device, a liquid chromatography device, a gas chromatography device, an electronic measurement device, or a mass spectroscopy device. Particularly, the fluidic chip device may be a High Performance Liquid device (HPLC) device by which different fractions of an analyte may be separated, examined and analyzed.

The processing element and the further processing element may be chromatographic columns for separating components of the fluidic sample. Therefore, exemplary embodiments may be particularly implemented in the context of a liquid chromatography apparatus.

The fluidic chip device may be adapted to conduct a liquid mobile phase through the first processing element and the second processing element. As an alternative to a liquid mobile phase, a gaseous mobile phase or a mobile phase including solid particles may be processed using the fluidic chip device. Also materials being mixtures of different phases (solid, liquid, gaseous) may be analyzed using exemplary embodiments.

The fluidic chip device may be adapted to conduct the mobile phase through the first processing element and the second processing element with a high pressure, particularly of at least 100 bar, more particularly of at least 500 bar. In the context of such a high pressure application, the temperature control of the mobile phase may be particularly of interest.

The fluidic chip device may be adapted as a microfluidic chip device. The term "microfluidic chip device" may particularly denote a fluidic chip device as described herein which allows to convey fluid through microchannels having a dimension in the order of magnitude of µm or less.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

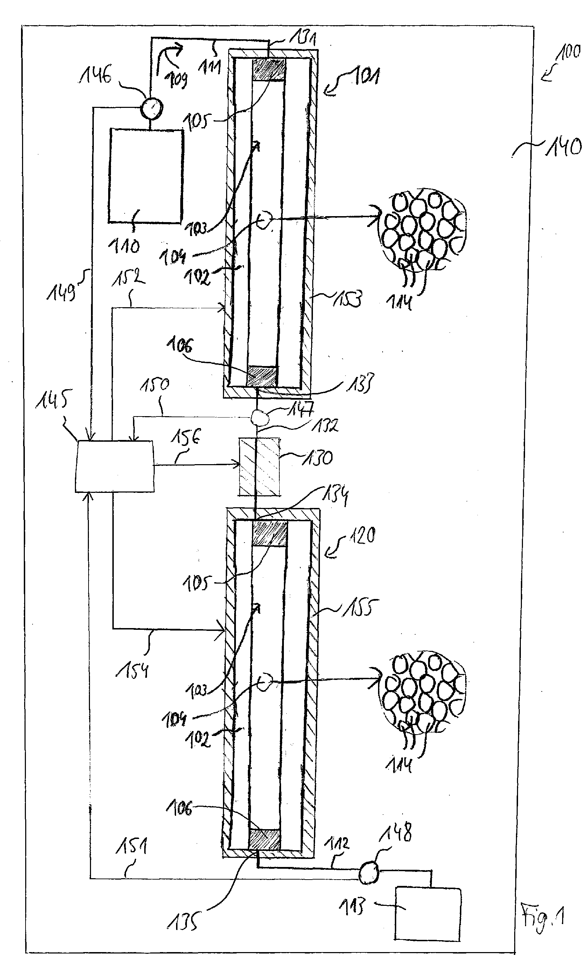

Fig. 1 to Fig. 6 illustrates fluidic chip devices according to exemplary embodiments.

The illustration in the drawing is schematically.

In the following, referring to **Fig.1,** a fluidic chip device 100 according to an exemplary embodiment will be explained.

The fluidic chip device 100 is adapted as a system for carrying out liquid chromatography investigations. The fluidic chip device 100 for separating different components of a fluid or a mobile phase which can be pumped through the apparatus 100 comprises a trap column 101 for pre-separating the fluidic sample and comprises an analytical or main column 120 for post-processing the fluidic sample which has already passed the pre-column 101. In other words, the system 100 is a two-stage fluid separation system.

In the embodiment of Fig.1, each of the fluid separating columns 101, 120 comprises a column tube 102 which is shaped to define closed packed channels, for instance having a rectangular cross-section. Within each of these fluid separating columns 101, 120, a tubular reception 103 is defined which is filled with a package composition 104.

The fluidic chip device 100 is adapted as a liquid chromatography device 100 and has, in each of the columns 101, 120, a first frit 105 close to an inlet 131, 134 of the respective columns 101, 120, and a second frit 106 provided at an outlet 133, 135 of the respective column 101, 120. The first frit 105 forms the inlet of the respective column 101, 120 and is provided upstream the respective column tube 102. The second frit 106 forms the outlet of the respective column 101, 120 and is located downstream of the respective column tube 102. A flowing direction of the fluid which is separated using the fluidic chip device 100 is denoted with the reference numeral 109.

A fluid separation control unit 110 is provided which pumps fluid under pressure of, for instance, 200 bar through a connection tube 111 and from there to the inlet 131 of the pre-column 101, through the first frit 105 into the column tube 102. After having left the column tube 102, that is to say after having passed the second frit 106, an intermediate tube 132 connected to an outlet 133 of the pre-column 101 transports the pre-separated analyte to the inlet 134 of the main column 120. The internal construction of the main column 120 is similar to that of the pre-column 101, but may (or may not) differ from the pre-column 101 with respect to size and fluid separating material 114 filled in the tubular reception 103.

Before the fluidic sample which is already pre-separated by the pre-column 101 flows through the inlet 134 of the main column 120, the fluid separation process is refined by allowing the sample to be heated by a sample heating unit 130. As will be described below in more detail, further temperature influencing components are provided along the fluid flow path.

In a further stage, the sample is further separated in the main column 120, and the further separated sample leaves the outlet 135 of the main column 120. After having left the column tube 102 of the main column 120, that is to say after having passed the second frit 106 of the main column 120, a second tube or pipe 112 transports the separated analyte to a container and analysis unit 113. The container and analysis unit 113 includes cavities or containers for receiving different components of the fluid, and may also fulfill computational functions related to the analysis of the separated component(s).

The column tubes 102 comprises the filling 104. In other words, a packing composition 104 comprising a plurality of silica gel beads 114 is inserted into the hollow bore 103 of the column tube 102 of each of the columns 101, 120.

The mobile phase is first conducted through the pre-column 101. By selecting an appropriate ACN concentration in a H₂O environment, a fraction of the fluidic sample may first be trapped at a particular position within the column tube 102 of the pre-column 101. This procedure may be denoted as a pre-focusing or pre-separation. Components of the mobile phase which are not trapped in the pre-column 101 are collected in a waste unit (not shown).

Afterwards, the ACN/ H₂O concentration ratio within the column tube 102 of the pre-column 101 may be selectively modified so as to elute the sample trapped in the column tube 102 of the pre-column 101. Then, the fluidic sample will move through the outlet 133 of the pre-column 101, and will enter the inlet 134 of the main column 120 to be trapped in a portion close to the outlet of the frit 105 of the main column 120.

When the fluid passes through the main column 120, components which differ from a fraction to be separated may simply pass through the column 120 without being trapped and may be collected in a waste (not shown). At the end of this procedure, a band of the fraction of the fluidic sample of interest is trapped at a particular position within the main column 120. By again modifying the concentration ratio ACN/H₂O, for instance by gradually modifying the respective contributions of these two components, the trapped sample may be released from the main column 120 and may be conducted to the unit 113, for further processing.

Therefore, the fluidic chip 100 is adapted for processing a fluidic sample to be conducted through the fluidic chip device 100. The fluidic chip device 100 comprises a substrate 140 which is a multilayer substrate in which various components of the fluidic chip device are integrated.

The fluidic chip device 100 comprises a substrate internal temperature affecting unit comprising a plurality of individual components which will be described in the following in detail. The substrate internal temperature affecting unit is adapted for affecting a temperature of a plurality of parts of the fluidic chip device 100 and is integrated in the chip 140.

The substrate internal temperature affecting unit comprises a central control unit 145. The central control unit 145 may comprise an integrated circuit/a microprocessor and controls the performance of the substrate integrated temperature affecting unit. Furthermore, the substrate internal temperature affecting unit comprises a first temperature sensor 146 which is provided in or close to a fluid path of the fluidic sample in the conduction tube 111 between the unit 110 and an inlet 131 of the first separation column 101. Therefore, the first temperature sensor 146 is capable of detecting a temperature of the fluidic sample close to a position in which the fluid separation starts to be performed.

Furthermore, the fluidic chip device 100 comprises a second temperature sensor unit 147 which is provided between the outlet 133 of the first fluid separation column 101 and the inlet 134 of the second fluid separation column 120. Therefore, the second temperature sensor 147 senses the temperature of the fluidic sample at a position between the two separation columns 101 and 120.

Furthermore, a third temperature sensor 148 is provided between the outlet 135 of the second separation column 120 and the unit 113. Therefore, the third sensor 148 detects the temperature of the sample after being separated by both columns 101 and 120.

As can further be taken from Fig. 1, first to third signal transmitting lines 149, 150 and 151 are provided for supplying the temperature detection signals from the sensors 146 to 148 to the temperature control unit 145. According to a specific algorithm which may include expert knowledge, stored database parameters, etc., the control unit 145 processes the signals provided via the lines 149 to 151 so as to calculate a desired temperature control pattern of the sample throughout the entire fluid path.

As a result of the application of such an algorithm, which can be also controlled by a user, the control unit 145 generates a first temperature control signal 152 which is supplied to a first ohmic heating element 153 (which may, alternatively, also be a cooling element or an element for selective heating or cooling) which is realized as a metallic conductor portion in thermal contact with the enrichment column 101. Therefore, the signal 152 is capable of heating the first ohmic heating element 153 so that the fluidic sample can be heated between the inlet 131 and the outlet 133 of the pre-column 101.

Furthermore, the control unit 145 generates a second temperature signal 156 which can be supplied to a second ohmic heating element 130 provided between the outlet 133 of the pre-column 101 and the inlet 134 of the main column 120. Therefore, the fluidic sample can also be selectively heated in a portion between the two separation columns 101, 120.

Beyond this, a third temperature control signal 154 may be generated by the control unit 145 so as to heat a third ohmic heating zone 155 which is a patterned metal layer adapted and arranged to be in thermal contact with the analytical column 120 to thereby heat a fluidic sample while passing through the analytical column 120.

In the following, referring to **Fig. 2,** a fluidic device 200 according to an exemplary embodiment will be explained. This fluidic device is a HPLC chip device (High Performance Liquid Chromatography).

The HPLC chip 200 again has an enrichment column 101 and an analytical column 120. An analytical pump 201 is provided to pump a fluid through the system 200. Furthermore, a loading pump 202 is provided to pump fluids through the system 200. A connection to a waste is denoted with reference numeral 250.

The fluidic device 200 can be operated in different operation modes.

In a sample load/reconditioning mode, the fluid flow within the device 200 is indicated by arrows 203. In this operation mode, the loading pump 202 supplies a mobile phase including a fluidic sample to the inlet 131 of the pre-column 101. When this mobile phase is pumped through the pre-column 101, a portion of the mobile phase is trapped in the pre-column 101, and the remaining portion is collected in the waste 250. Furthermore, for (re-)conditioning the analytical column 120, a rinse fluid may be pumped through the analytical column 120 using the analytical pump 201.

In a second operation mode, which is indicated in Fig. 2 with arrows 204, the sample is further analyzed. In the second operation mode, the analytical pump 201 pumps fluid from the enrichment column 101 to the analytical column 120. In other words, the fluidic sample which is trapped on the enrichment column 101 is eluted by supplying an appropriate mixture of water and ACN, so that at a specific concentration, the trapped sample is released from the enrichment column 101 and is supplied to the analytical column 120.

At the outlet 135 of the analytical column 120, a spray 260 may be emitted at a tip 265 which spray 260 may be supplied to a mass spectrometer unit (not shown in Fig. 2) for further analysis.

The plastic substrate 140 may have a thickness of 0.3 mm and may have dimensions in length and width of several cm.

In the embodiment of Fig. 2, a component part 270 is provided as a rotary system which allows a flexible operation and use of the pumps 201, 202 so that the two pumps 201, 202 may be used in the different above-mentioned operation states of the system 200. For details with respect to possible embodiments for the rotary system 270, explicit reference is made to EP 1,520,837 A1 (which is in its entity incorporated by reference into this patent application, particularly with regard to the embodiments shown in Fig.1 to Fig.4B).

The rotary system 270 comprises an inner rotor 271 and an outer rotor 272. These rotors 271, 272 may be mechanically actuated or operated so as to adjust a desired fluid path, in accordance with a respective operation mode of the system.

The rotary system 270 is switchable between different fluid path configurations. Particularly, the first revolving valve element 271 has fluidic interfaces with the pre-column 101 and with the main column 120, and the second revolving valve 272 has fluidic interfaces with the pre-column 101.

Furthermore, various grooves 273 of the inner and the outer rotors 271, 272 are shown which may be adjusted between the different operation modes. For operating the fluidic chip device 200, the outer rotor 272 may be omitted. For instance, it is possible to connect the pump 202 directly to the groove 273 of the inner rotor 271 which groove 273 is directly connected to the inlet 131 of the first column 101.

Furthermore, a plurality of components of the temperature affecting unit are shown in Fig. 2.

In a similar manner as described referring to Fig. 1, a temperature sensor 147 measures the temperature of the fluidic sample between the outlet 133 of the pre-column 101 and the inlet 134 of the main column 120 and provides a corresponding temperature signal 150 to the control unit 145. The control unit 145 evaluates the temperature detection signal 150 and generates a temperature control signal 154. This temperature control signal 154 acts on a switch 280 to open or close an electrically conductive connection in a circuit which is supplied with electrical energy by a DC source 285. When the switch 280 is closed, current can flow through the heating wire 155 to heat the environment of the main column 120. When the switch 280 is open, no heating is performed. By taking this measure, the fluidic sample may be heated with the integrated temperature control unit shown in Fig. 2. In a similar manner, other functional components of the fluidic device 200 may be thermally influenced, for instance the pre-column 101.

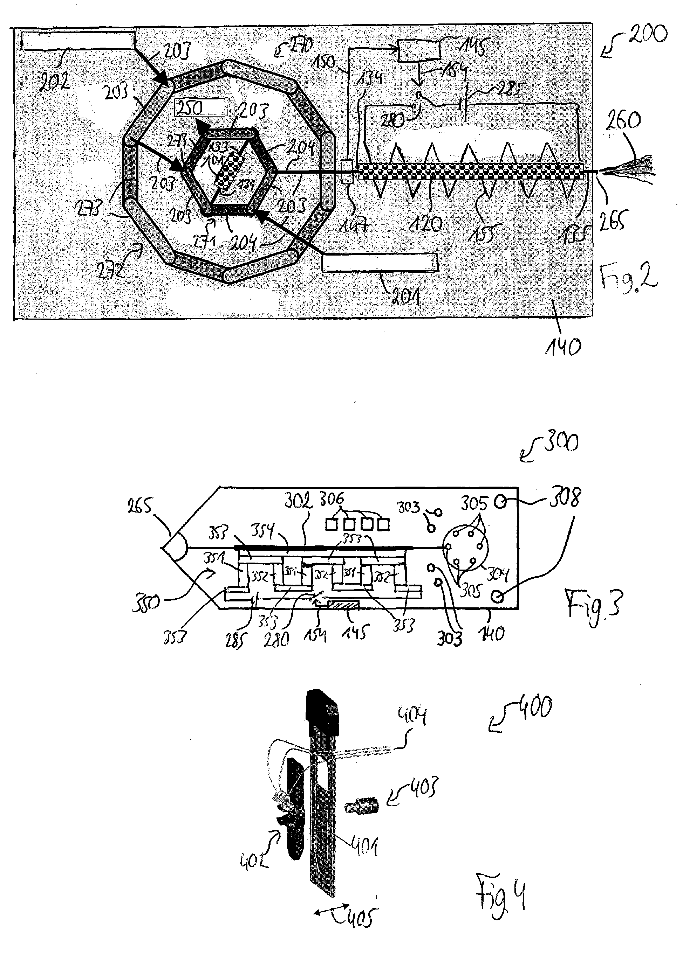

In the following, referring to **Fig. 3**, a microfluidic chip 300 according to an exemplary embodiment will be explained.

The microfluidic chip 300 comprises one or more microfluidic flow paths. The microfluidic chip shown in Fig. 3 comprises a separation column 302, said separation column 302 being adapted for separating components of a sample of interest. For analyzing a given sample, techniques such as for instance electrophoresis or liquid chromatography might be employed, with the separation column 302 being filled with some kind of packing material. The microfluidic chip 300 might further comprise fluid ports 303 adapted for supplying various fluids like for instance solvents, eluents, sample, etc. to the chips flow paths, and for carrying off waste flows. Because of the ever decreasing dimensions of microfluidic flow parts, it might be necessary to supply fluids with pressures of 100 bar and above. The microfluidic chip 300 might further comprise a multiroute switching valve adapted for switching between different flow paths. The multiroute switching valve may comprise a rotor element 304 that is tightly pressed onto fluid ports 305 of the microfluidic chip, which acts as a stator. By rotating the rotor element 304 to different positions, it is possible to switch between different fluid connection of the fluid ports 305.

Required voltages and/or currents may be applied via a set of contact pads 306. For example, in case of electrophoresis being used for separating sample components, the voltage required for driving ionized species through the separation column 302 may be applied to the contact pads 306. In the example of Fig. 3, the microfluidic chip 300 further comprises an electrospray nozzle 265 that is fluidly connected with a separation column outlet. The electrospray nozzle 265 is adapted for ionizing species obtained from the separation column 302, and for providing a spray of ionized species to an external mass spectroscopy unit (not shown).

The microfluidic chip 300 comprises the substrate 140 which may be made of different layers of polymeric foil. First, these polymeric foils are microstructured using techniques such as hot embossing, laser ablation, etc. Then, the different polymeric foils are assembled, in order to form a microfluidic chip device. Preferably, for the different layers, materials such as for instance polyimide or PEEK (Polyether Ether Ketone) are used.

The microfluidic chip 300 might further comprise registration holes 308 that extend through the entire chip. The registration holes 308 are used for aligning and fixing the microfluidic chip 300.

During operation of the chip 300, the fluidic sample to be passed through the column 302 shall be adjusted with respect to temperature. For this purpose, a temperature control unit 145 is provided which generates a temperature control signal 154 for operating a switch 280. When the switch 280 is closed, current can flow through a circuit which will be described in the following in more detail powered by the direct current source 285. Thus, heating or cooling may be performed using a Peltier element 350 integrated within the substrate 140.

The Peltier element 350 comprises a plurality of first doped semiconductor elements 351 and a plurality of second doped semiconductor elements 352. The first doped semiconductor elements 351 may be p-doped, and the second doped semiconductor elements 352 may be n-doped, or vice versa (this may have an influence on the heating or cooling capability of the Peltier element 350). The individual elements 351, 352 which are arranged in an alternating manner in the electric current path are bridged by metal pieces 353. Due to the Peltier effect, a heating or cooling effect is generated in the metal pieces 353 located close to the column 302 so that the column 302 may be heated. For improving the thermal contact between the metal pieces 353 and the separation cube 302, a thermally conductive element 354 may be provided.

**Fig. 4** shows a microfluidic device 400 similar to that of Fig. 3, and illustrates the special arrangement of the individual components.

The fluidic device 400 comprises a HPLC-chip 401. A stator component 402 and a rotor component 403 are shown as well. Beyond this, a fluidic flow from nanopump and injector is indicated by reference numeral 404. Clamp forces 405 may be used for fastening the individual elements of the fluidic device 400.

In the following, referring to **Fig. 5**, a fluidic chip device 500 according to an exemplary embodiment will be explained.

The fluidic chip device 500 has a substrate which comprises of a plurality of layers. The substrate comprises a top layer 501, a bottom layer 502 and an intermediate layer 503 sandwiched between the top layer 501 and the bottom layer 502. The bottom layer 502 and the top layer 501 are provided as continuous layers, whereas the intermediate layer 503 is patterned. However, alternatively, also the bottom layer 502 and/or the top layer 501 may be patterned. For example, delivery conduits and drain conduits may be formed in the bottom layer 502 and/or the top layer 50 (not shown). After having patterned the intermediate layer 503, electrically conductive portions 504 may be implemented which may be separated from a fluid flow channel 505 by thin electrically insulating but thermally conductive barriers 506. When a fluidic sample to be separated flows through the conduit 505, wherein the fluid flow is perpendicular to the paper plane of Fig. 5, the temperature of the fluid can be increased by applying a current to the electrically conductive regions 504 which have a relatively high ohmic resistance and therefore can serve as an ohmic heating element.

In the embodiment of the fluidic device 600 shown in **Fig. 6**, three intermediate layers 601 to 603 are provided between a top layer 501 and a bottom layer 502. The upper intermediate layer 601 has a conduit 505 through which the fluidic sample to be analyzed can be conducted. Furthermore, a further conduit 604 is formed through which a hot or cool liquid or gas may be conducted to thereby selectively cool or heat the fluidic sample flowing through the conduit 505. The layer 602 serves as a thermally conductive layer for thermally coupling the fluidic sample flowing through the conduit 505 with the hot or cool liquid or gas flowing through the conduit 604. As an alternative to the embodiment of Fig. 6, it is possible to provide a further conduit 604 in a layer above the layer 601, for instance in a layer 501. Such a temperature adjustment from above and below may allow to obtain more homogenous temperature conditions around the channel 505. Fluids pumped through two such conduits 604 may also be forced to traverse the two conduits 604 in opposite direction, in a counter flow architecture. The layer 602 may be free of a pattern in a region adjacent to the conduit 505, but may be patterned in other portions.

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A fluidic chip device (100) adapted for processing a fluidic sample, wherein the fluidic sample is to be conducted through the fluidic chip device (100), the fluidic chip device (100) comprising
a substrate (140);
a substrate internal temperature affecting unit (130, 145 to 148, 153, 155) adapted for affecting a temperature of at least a part of the fluidic chip device (100).

2. The fluidic chip device (100) according to claim 1,
wherein the temperature affecting unit (130, 145 to 148, 153, 155) is adapted for affecting the temperature of the fluidic sample being conducted through the fluidic chip device (100).

3. The fluidic chip device (100) according to claim 1 or any one of the above claims,
comprising a processing element (101) provided on and/or in the substrate (140) and adapted for interacting with the fluidic sample.

4. The fluidic chip device (100) according to claim 3,
wherein the temperature affecting unit (130, 145 to 148, 153, 155) is adapted for affecting the temperature of the processing element (101).

5. The fluidic chip device (100) according to claim 1 or any one of the above claims,
comprising a temperature sensor (146 to 148) provided on and/or in the substrate (140) and adapted for measuring a temperature of at least a part of the fluidic chip device (100).

6. The fluidic chip device (100) according to claim 5,
wherein the temperature sensor (146 to 148) is adapted for providing a measurement signal (149 to 151) indicative of the measured temperature to the temperature affecting unit (145);
wherein the temperature affecting unit (145) is adapted to adjust the temperature of at least a part of the fluidic chip device (100) to a desired value based on the measured temperature.

7. The fluidic chip device (100) according to claim 1 or any one of the above claims,
wherein the temperature affecting unit (130, 145 to 148, 153, 155) is adapted for affecting a temperature of different parts of the fluidic chip device (100) separately.

8. The fluidic chip device (500, 600) according to claim 1 or any one of the above claims,
wherein the substrate comprises a plurality of layers (501 to 503, 601 to 603).

9. The fluidic chip device (500, 600) according to claim 1 or any one of the above claims,
wherein the substrate comprises a top layer (501), a bottom layer (502), and at least one intermediate layer (503, 601 to 603) sandwiched between the top layer (501) and the bottom layer (502).

10. The fluidic chip device (500, 600) according to claim 9,
wherein at least one of the at least one intermediate layer (503, 601 to 603) comprises a conduit (505) through which the fluidic sample is to be conducted, and wherein at least one of the at least one intermediate layer (503, 601 to 603) comprises the temperature affecting unit (504, 604).

11. The fluidic chip device (500) according to claim 10,
wherein the conduit (505) and the temperature affecting unit (504) are provided in a common one of the at least one intermediate layer (503).

12. The fluidic chip device (600) according to claim 11,
wherein the conduit (505) and the temperature affecting unit (604) are provided in different ones of the at least one intermediate layer (601, 603).

13. The fluidic chip device (100) according to claim 3 or any one of the above claims,
wherein the processing element (101) is adapted for retaining the fluidic sample being a part a mobile phase and for allowing other components of the mobile phase to pass the processing element (101).

14. The fluidic chip device (100) according to claim 13,
comprising a further processing element (120) provided on and/or in the substrate (140), located downstream the processing element (101), adapted for interacting with the fluidic sample and adapted to be supplied with the fluidic sample released from the processing element (101) and to further separate the fluidic sample from other components of the mobile phase.

15. The fluidic chip device (200) according to claim 14,
comprising a tip (265) coupled to an outlet (135) of the further processing element (120) and adapted to be coupled to a mass spectroscopy unit.

16. The fluidic chip device (200) according to claim 15,
wherein the temperature affecting unit is adapted for affecting the temperature of the tip (265).

17. The fluidic chip device (200) according to claim 15 or any one of the above claims,
comprising a mass spectroscopy unit to be coupled to the tip (265).

18. The fluidic chip device (100) according to claim 3 or any one of the above claims,
wherein at least one of the group consisting of the processing element (101) and the further processing element (120) comprises at least one of the group consisting of a separation column and a trap column.

19. The fluidic chip device (100) according to claim 1 or any one of the above claims, comprising at least one of the following features:
the temperature affecting unit (130, 145 to 148, 153, 155) is adapted for heating at least a part of the fluidic chip device (100);
the temperature affecting unit (350) is adapted for cooling at least a part of the fluidic chip device (300);
the temperature affecting unit comprises at least one of the group consisting of a Peltier heating element, a Peltier cooling element (350), a heating cartridge, a cooling cartridge, a fluid cooling unit, a fluid heating unit, an ohmic heating element (130, 153, 155), an inductive heating element, and a capacitive heating element.

20. The fluidic chip device (100) according to claim 1 or any one of the above claims, comprising at least one of the following features:
the substrate internal temperature affecting unit (130, 145 to 148, 153, 155) is adapted as one of the group consisting of a temperature control unit and a temperature regulating unit;
the substrate internal temperature affecting unit (130, 145 to 148, 153, 155) is integrally formed with the substrate (140);
the substrate internal temperature affecting unit (130, 145 to 148, 153, 155) is provided on and/or in the substrate (140);
the substrate (140) comprises at least one material of the group consisting of a plastic, a polymer, a metal, a semiconductor, and a ceramic;
the substrate (140) has an essentially rectangular cross section;
the substrate (140) has a plate shape;
the fluidic chip device (500) comprises a conduit (505) formed in the substrate, wherein the fluidic sample is conductable through the conduit (505);
at least a part of the processing element (101) and at least a part of the further processing element (120) is filled with a fluid separating material (104);
at least a part of the processing element (101) and at least a part of the further processing element (120) is filled with a fluid separating material (104), wherein the fluid separating material comprises beads (114) having a size in the range of essentially 1 µm to essentially 50 µm;
at least a part of the processing element (101) and at least a part of the further processing element (120) is filled with a fluid separating material (104), wherein the fluid separating material (104) comprises beads (114) having pores having a size in the range of essentially 0.02 µm to essentially 0.03 µm;
at least a part of the processing element (101) is filled with a first fluid separating material (104) and at least a part of the further processing element (120) is filled with a second fluid separating material (104) being identical with the first fluid separating material (104);
at least a part of components of the fluidic chip device (100) is integrated in a plastic chip (140);
the fluidic chip device (100) is adapted as a fluid separation system for separating compounds of the fluidic sample;
the fluidic chip device (100) is adapted as a fluid purification system for purifying the fluidic sample;
the fluidic chip device (100) is adapted to analyze at least one physical, chemical and/or biological parameter of at least one compound of the fluidic sample;
the fluidic chip device (100) comprises at least one of the group consisting of a sensor device, a test device for testing a device under test or a substance, a device for chemical, biological and/or pharmaceutical analysis, a capillary electrophoresis device, a liquid chromatography device, a gas chromatography device, a gel electrophoresis device, an electronic measurement device, and a mass spectroscopy device;
the processing element (101) and the further processing element (120) are chromatographic columns for separating components of the fluidic sample;
the fluidic chip device (100) is adapted to conduct a liquid fluidic sample through the processing element (101) and the further processing element (120);
the fluidic chip device (100) is adapted to conduct the fluidic sample through the processing element (101) and the further processing element (120) with a high pressure;
the fluidic chip device (100) is adapted to conduct the fluidic sample through the processing element (101) and the further processing element (120) with a pressure of at least 100 bar, particularly of at least 500 bar;
the fluidic chip device (100) is adapted to convey a fluid through channels formed in the substrate (140);
the fluidic chip device (100) is adapted to convey a fluid through channels formed in the substrate (140), the channels having a dimension in the order of magnitude of micrometers;
the fluidic chip device (100) is adapted as a microfluidic chip device;
the fluidic chip device (100) is adapted as a nanofluidic chip device.

21. A method of processing a fluidic sample, the method comprising
conducting the fluidic sample through a fluidic chip device (100);
affecting a temperature of at least a part of the fluidic chip device (100) using a substrate internal temperature affecting unit (130, 145 to 148, 153, 155).
